# EUROPEAN PATENT APPLICATION

(11) **EP 3 757 249 A1**
(43) Date of publication of application: **30.12.2020**
(21) Application number: 19182403.6
(22) Date of filing: 25.06.2019
(51) Int. Cl.: C23C 18/18, C23C 18/20, C25D 5/54, C25D 5/56, C09D 11/52

(54) **AN AQUEOUS, NOBLE METAL-FREE ACTIVATION COMPOSITION FOR ACTIVATING A SURFACE OF A NON-CONDUCTIVE SUBSTRATE FOR METALLIZATION**

(71) Applicant: Atotech Deutschland GmbH, 10553 Berlin (DE)
(72) Inventor: Donner, Constanze, 10553 Berlin (DE); Brunner, Heiko, 10553 Berlin (DE); Janßen, Knut-Arne, 10553 Berlin (DE); Kohlmann, Lars, 10553 Berlin (DE)
(74) Representative: Atotech Deutschland GmbH

(57) **Abstract**

The present invention relates to an aqueous, noble metal-free activation composition for activating a surface of a non-conductive substrate for metallization, the composition comprising:
at least one activator, selected as a conductive mixed oxide at a total concentration ranging from 0.1 wt.-% to 25 wt.-% based on the total weight of the aqueous, noble metal-free activation composition.

## Description

### Field of the Invention

The present invention relates to the activation of surfaces of typically non-conductive substrates for subsequent metallization.

In particular, the present invention relates to an aqueous, noble metal-free activation composition for activating a surface of a non-conductive substrate for metallization, a method for activating a surface of a non-conductive substrate for metallization, a method for preparing an aqueous, noble metal-free activation composition for activating a surface of a non-conductive substrate for metallization and a method for metallizing an activated surface of a non-conductive substrate.

### Background of the Invention

A metallization of typically non-conductive substrates is commercially of high interest. In many aspects of daily life non-conductive substrates are covered with structures or layers of metal, either for decorative or functional applications. For example, typically non-conductive plastic substrates are used to manufacture sanitary articles with a shiny chromium layer. Furthermore, quite a number of chromium covered plastic substrates are used in the automotive industry.

Besides such decorative articles, a functional metallization is essential in for example manufacturing printed circuit boards. In such boards typically a non-conductive resin-containing laminate is used as a base material usually harboring a circuitry of copper lines.

All these applications require a usually multi-step preparation of the non-conductive substrate to make it receptive for subsequent metallization.

In a first step usually a cleaning of the surface of the non-conductive substrate is carried out, e.g. to remove grease or impurities.

In a second step typically a pre-treatment or conditioning of said surface is conducted in order to make the surface receptive to the following activation. Such a pre-treatment for example includes in some cases an etching in order to create pores and to enlarge the surface.

In a third step the important activation is carried out. In such an activation usually a very thin seed or activation layer is deposited/anchored on the surface of the non-conductive substrate, serving as starting point for a subsequent first metallization layer. As a result, an activated surface for metallization is obtained. The seed or activation layer usually serves as mediator between said surface of the non-conductive substrate and the one or more following metallization layers. Typically, the seed/activation layer is formed by depositing metal nanoparticles on said surface, for example from a colloidal activation composition.

In a fourth step typically said first metallization layer is deposited on the seed/activation layer, most commonly by electroless plating. In some cases, this electroless plating includes an immersion-type plating, i.e. a deposition of a more noble metal on the seed/activation layer by means of exchange reaction and in absence of a reducing agent. In other cases, it includes a deposition of a metal or metal alloy through autocatalytic deposition, which means a deposition facilitated by means of a reducing agent.

In an optional fifth step a second metallization layer is deposited on the first metallization layer, either again by autocatalytic deposition or by electrolytic deposition.

Typically, in a common colloidal activation composition noble metal nanoparticles are utilized, very often palladium nanoparticles. However, noble metals are generally expensive and waste water treatment is of high concern in order to recycle remaining noble metals. Alternatively, also less expensive metal ions are more and more utilized in respective activation compositions.

Another common disadvantage is that known activation compositions may eventually experience a form of decay or decomposition. The nanoparticles may agglomerate and form insoluble, precipitating agglomerates, rendering the composition eventually inoperable. It is therefore typically desired to stabilize the nanoparticles after they have been formed through reducing respective metal ions. For this purpose, usually stabilizer compounds are used, altering the charge distribution of the particles and/or limiting the particle size. In many cases polymers and/or metal ions (such as tin ions) are used for these purposes.

However, commonly used noble metals are expensive, so there is a demand to reduce such noble metals, in particular palladium, in activation compositions.

For example, CN 107460459 A relates to simple nano-copper activation liquid utilizing stabilizers and reducing agents to prevent agglomeration and oxidation, respectively, of the nanoparticles.

US 4,278,712 discloses a method for the activation of a weakly active colloidal dispersion useful in the preparation of non-conductors prior to electroless plating. The method is based upon controlled oxidation of otherwise weakly active colloids by treatment with suitable gases and/or chemical agents, which render said controlled oxidation. However, the presence of at least one colloid stabilizer is mandatory. In this way a reversible equilibrium is not maintained.

Such approaches as described in the art typically have the disadvantage that they are sooner or later sensitive to agglomeration and precipitation, mostly because the stabilizer compounds do not sufficiently stabilize the particles over time. As a result, product life time very strongly depends on the date of production, delivery time, and the quality of stabilization.

Furthermore, it appears that such stabilizer compounds often reduce the ability of the nanoparticles to effectively activate the respective surface. It seems that the additives on the one hand - at least to a certain degree - avoid agglomeration but on the other hand hinder these particles to quickly and strongly adsorb on the surface.

### Objective of the present Invention

It was therefore an objective of the present invention to provide an aqueous, activation composition for activating a surface of a non-conductive substrate for metallization, and respective method for activating a surface of a non-conductive substrate for metallization, which is on the one hand simple and highly effective, and on the other hand is in particular insensitive to agglomeration and precipitation to ensure a long service life. Furthermore, such a composition and respective method should be low-priced.

It was another objective of the present invention to provide a composition and respective method with reduced environmental burden, e.g. with less sophisticated waste-water treatment and reduced effective concentrations of chemicals.

It was furthermore an objective of the present invention to provide a composition and respective method with increased life time, in particular for the utilized activation composition.

### Summary of the Invention

The objectives mentioned above are solved according to a first aspect by an aqueous, noble metal-free activation composition for activating a surface of a non-conductive substrate for metallization, the composition comprising:
at least one activator, selected as a conductive mixed oxide at a total concentration ranging from 0.1 wt.-% to 25 wt.-% based on the total weight of the aqueous, noble metal-free activation composition.

By using at least one activator, which is selected as a conductive mixed oxide, in the aqueous, noble metal-free activation composition the surface of the non-conductive substrate is effectively activated without the need of using expensive noble metals, preferably palladium, thereby significantly reducing the cost of the activation composition.

During a subsequent metallization of the activated surface, the conductive mixed oxide of the activated surface of the substrate effectively catalyses the deposition of metal, in particular by catalysing the oxidation of the reducing agent in the metallization composition, thereby allowing the reducing agent to reduce metal ions present in the metallization composition to allow for an effective deposition of the metal to the activated surface of the substrate.

Experiments have shown that in the present invention a very simple and effective activation is achieved even without the need of sophisticated anti-oxidation of formed particles. In contrast to common activation compositions, it turned out that no anti-oxidation of formed particles is needed at all.

Typically, in common activation compositions such as noble metal compositions oxidation is considered harmful and is therefore minimized and/or suppressed. In contrast thereto, in the present invention the conductive mixed oxides are stable in respect to oxidation.

However, since conductive mixed oxides according to the present invention are typically insoluble in water, said conductive mixed oxides can form a dispersion in the aqueous activation composition according to the present invention. However, due to agglomeration a dispersion of conductive mixed oxides in water is only stable for a limited time.

Moreover, the use of conductive mixed oxides in the aqueous, noble metal-free activation composition according to the present invention allows for an elimination of noble metals, in particular palladium, from said activation composition. Due to the high prices of noble metals, in particular palladium, compared to the prices of conductive mixed oxides, the costs of the aqueous, noble metal-free activation composition could be significantly reduced compared to conventional compositions, which contain noble metal, in particular palladium.

### Detailed Description of the Invention

### The aqueous, noble metal-free activation composition:

The present invention according to the first aspect provides an aqueous, noble metal-free activation composition for activating a surface of a non-conductive substrate for metallization, the composition comprising:
at least one activator, selected as a conductive mixed oxide at a total concentration ranging from 0.1 wt.-% to 25 wt.-% based on the total weight of the aqueous, noble metal-free activation composition.

Preferably, the at least one activator, selected as a conductive mixed oxide, is a non-photocatalytic activator, selected as a conductive mixed oxide. The non-photocatalytic activator allows for an activation of the surface of the non-conductive substrate without photocatalysis, i.e. without using UV-radiation. In particular, by using a non-photocatalytic activator the activation of the surface of the non-conductive substrate is achieved by the catalytic properties of the activator itself without any external stimulus, which is different to commonly known photocatalytic activators disclosed in the prior art.

The aqueous activation composition according to the present invention is noble metal-free, in particular free of palladium. Therefore, the aqueous activation composition is substantially free of or does not comprise noble metal ions, in particular palladium ions. This means that neither compounds comprising noble metal are present nor noble metal atoms/particles or noble metal ions. Advantageously, the present invention is an excellent alternative to noble metal-containing activation processes with identical or at least almost identical results in terms of activation.

Preferably, also other noble metals or at least expensive/rare metals are not present in the aqueous activation composition. Thus, preferred is an aqueous activation composition of the present invention, wherein the activation composition is substantially free of or does not comprise platinum ions, gold ions, silver ions, rhodium ions, ruthenium ions, and iridium ions, preferably is substantially free of or does not comprise platinum, gold, silver, rhodium, ruthenium, and iridium.

Preferably, the at least one activator is selected as a spinel-type conductive mixed oxide of formula (I)

A(B)₂O₄ (I)

wherein A = Mn²⁺, Mg²⁺, Fe²⁺, Ni²⁺, Co²⁺, or Zn²⁺; and
wherein B = Fe³⁺, Cr³⁺, Co³⁺, Al³⁺, or V³⁺.

Selecting a spinel-type conductive mixed oxide of formula (I) as the at least one activator allows for an effective catalysis of metallization of the activated surface of the substrate during a subsequent metallization reaction. In particular, spinel-type conductive mixed oxides allow for oxidation of the reducing agent present in the metallization composition, as example for oxidizing formaldehyde to formic acid and/or for oxidizing glyoxylic acid, and the associated reduction of copper (II) ions to copper during metallization.

Preferably, the at least one activator is selected as a normal or inversed spinel-type conductive mixed oxide of formula (la)

(A₁₋ₓBₓ)(AₓB₂₋ₓ)O₄ (la)

wherein A = Mn²⁺, Mg²⁺, Fe²⁺, Ni²⁺, Co²⁺, or Zn²⁺;
wherein B = Fe³⁺, Cr³⁺, Co³⁺, Al³⁺, or V³⁺; and
wherein x = 0 for a normal spinel-type conductive mixed oxide, or
wherein x = 1 for an inverse spinel-type conductive mixed oxide.

In a normal spinel-type conductive mixed oxide of formula (la), wherein x is selected as 0, the compounds of formula la are selected as A(B₂)O₄. In the crystal structure of a normal spinel-type conductive mixed oxide, the oxide ions form the basic structure of a face centered cubic lattice, wherein one eight of the tetrahedral sites are occupied by the metal A, and wherein one half of the octahedral sites are occupied by the metal B.

In an inverse spinel-type conductive mixed oxide of formula (la), wherein x is selected as 1, the compounds of formula la are selected as (A₂B₁)(A₁B₂)O₄. In the crystal structure of an inverse spinel-type conductive mixed oxide, the oxide ions form the basic structure of a face centered cubic lattice, wherein one quarter of the tetrahedral sites are occupied by the metal A, and wherein one quarter of the octahedral sites and one eight of the tetrahedral sites are occupied by the metal B.

Preferably, the at least one activator is selected as magnetite (Fe₃O₄), nickel ferrite (NiFe₂O₄), copper ferrite (CuFe₂O₄), manganese ferrite (MnFe₂O₄), cobalt ferrite (CoFe₂O₄), and/or cobaltite (Co₃O₄).

By selecting the respective activators, preferably magnetite, an efficient activation of the surface of the non-conductive substrate can be achieved.

Preferably, the aqueous, noble metal-free activation composition comprises the at least one activator at a total concentration ranging from 0.2 wt.-% to 20 wt.-%, more preferably from 0.5 wt.-% to 15 wt.-%, even more preferably from 1 wt.-% to 10 wt.-%, even more preferably from 2.5 wt.-% to 5 wt.-% and most preferably the concentration is 2.5 wt.-%.

Although an activation of the substrate can be basically carried out with comparatively high concentrations of the at least one activator, it turned out that low concentrations are already sufficient to obtain very efficient and excellent results (see examples). This is in particular advantageous in terms of waste-water treatment and is thus cost- and ecofriendly.

Preferably, the at least one activator is selected as a functionalized conductive mixed oxide comprising an organic component, wherein the organic component comprises hydrophilic residues selected from the group consisting of hydroxy, phosphonate, siloxane. The organic component is more preferably selected from polyethyleneglycoles (PEGs), even more preferably PEG 1000, organic phosphonic acids, even more preferably vinyl phosphonic acid, hydroxy carboxylic acids, polyethoxylated carboxylic acids, polycarboxylic acids, even more preferably citric acid, and/or siloxanes, even more preferably 3-Aminopropyltriethoxysilan (3-APTES) and/or Tetraethylorthosilicate (TEOS).

By using a functionalized conductive mixed oxide comprising an organic component as the at least one activator, the colloidal stability of the conductive mixed oxide in the aqueous activation composition is ensured thereby preventing precipitation of the conductive mixed oxide. Said organic component of the functionalized conductive mixed oxide add a plurality of hydrophilic groups to the activator structure thereby stabilizing the activator in the aqueous solution. Without to be bound by theory, it is believed that the components are working like a shell around conductive mixed oxide e.g. conductive mixed oxide colloids, which prevents precipitation of the conductive mixed oxide. The organic component of the functionalized conductive mixed oxide itself is not essential for the activation reaction of the activator.

Preferably, the mixed oxide of the at least one activator, selected as a conductive mixed oxide and/or a functionalized conductive mixed oxide comprising an organic component, is not bound to an additional inorganic substituent, wherein more preferably the mixed oxide is not bound to an inorganic oxide, even more preferably TiO₂ and/or SiO₂, and/or is not bound to a metal, even more preferably not to Ag.

By omitting any additional inorganic substituents bound to the conductive mixed oxide the catalytic properties of the conductive mixed oxide are solely derived from the conductive mixed oxide itself and not from any additional inorganic catalysing substances. In particular, the catalytic properties of the conductive mixed oxide are not derived from any additional inorganic photocatalytic substances.

Preferably, the activation composition has an acidic pH, a neutral pH, or an alkaline pH, more preferably an acidic or neutral pH, and most preferably an acidic pH.

An acidic pH of the activation composition is highly effective for binding of the conductive mixed oxide to the surface of the non-conductive substrate, since the condensation reaction of the conductive mixed oxide to the non-conductive substrate might be facilitated by a high proton concentration present at an acidic pH.

Preferably, a pH-value of the aqueous, noble metal-free activation composition ranges from 2.5 to 13.0, more preferably ranges from 2.5 to 8.0, even more preferably ranges from 3.0 to 7.0, even more preferably ranges from 4.0 to 5.0, even more preferably ranges from 4.2 to 4.8.

In the preferred pH-range the stability of the activator in the activation composition is increased.

If an adjustment of the pH is necessary, it is carried out by typical means. Preferred acids are mineral acids and organic acids. A preferred mineral acid is sulfuric acid. A preferred alkaline compound is an alkaline hydroxide, preferably NaOH, an alkaline carbonate, preferably sodium carbonate, and ammonia.

In the context of the present invention, the pH is determined at a temperature of 20°C, i.e. the defined pH is referenced to 20°C. Thus, only for the sake of pH determination the activation composition has a temperature of 20°C. This does not mean that the activation composition in itself is limited to the specific temperature of 20°C. For preferred temperatures of the activation composition see below.

If the pH is significantly below 2.5 or above 13 a mostly insufficient stabilization of the activator dispersion in the aqueous solution is obtained. If the pH is too acidic typically acid-sensitive conductive mixed oxides decompose too quickly.

Preferably, the aqueous, noble metal-free activation composition comprises a first stabilizer selected as an acid, more preferably as acetic acid, formic acid, nitric acid, and/or sulphur-containing acid, even more preferably as methane sulfonic acid, allyl sulfonic acid, vinyl sulfonic acid and/or sulfuric acid, and most preferably as sulfuric acid.

By adding an acid to the aqueous, noble metal-free activation composition the stability of the activator in the aqueous composition can be increased.

Preferably, the aqueous, noble metal-free activation composition comprises a second stabilizer selected as an inorganic salt, more preferably as sulfate containing salt, even more preferably as alkaline metal sulfate, even more preferably as lithium sulfate, sodium sulfate, potassium sulfate, rubidium sulfate, caesium sulfate, and/or even more preferably as methane sulfonate, methane tri-sulfonate, methane di-sulfonate, allyl sulfonate and/or vinyl sulfonate, most preferably at a concentration ranging from 0.05 mol/I to 10 mol/l, more preferably from 0.01 mol/I to 5 mol/l, and most preferably from 0.25 mol/I to 2.5 mol/l.

By adding the inorganic, preferably sulfate-containing, salt to the aqueous, noble metal-free activation composition the stability and/or catalytic activity of the activator in the activation composition can be increased.

The aqueous, noble metal-free activation composition utilized in the present invention is an aqueous composition, which means that water is the primary component.

Preferably, the aqueous, noble metal-free activation composition comprises at least 50 wt.-% water, based on the total weight of the aqueous composition, preferably at least 70 wt.-% water, even more preferably at least 90 wt.-% water, most preferably at least 95 wt.-% water, and even most preferably at least 97.5 wt.-% water.

Only in rare cases it is preferred that the composition comprises at least one additional solvent other than water that is miscible with water. However, most preferred for ecological reasons is a composition, wherein water is the only solvent, and, thus, most preferably the composition is substantially free of or does not comprise organic solvents at all.

In the context of the present invention, the term "substantially free of or do not comprise" of a subject-matter (e.g. a compound, a chemical, a material, etc.) independently denotes that said subject-matter is not present at all ("does not comprise") or is present only in (to) a very little and non-disturbing amount (extent) without affecting the intended purpose of the invention ("substantially free of"). For example, such a subject-matter might be added or utilized unintentionally, e.g. as unavoidable impurity. "substantially free of or does not comprise" preferably denotes 0 (zero) ppm to 5 ppm, based on the total weight of e.g. the activation composition, preferably 0 ppm to 3 ppm, more preferably 0 ppm to 1.5 ppm, even more preferably 0 ppm to 1 ppm, most preferably 0 ppm to 0.5 ppm, even most preferably 0 ppm to 0.1 ppm. This principle applies likewise to other subject-matters, e.g. to the total weight of the conductive mixed oxide of the composition of the present invention.

Preferably, the aqueous, noble metal-free activation composition is substantially free of or does not comprise tin ions, preferably is substantially free of or does not comprise tin ions, indium ions, lead ions, germanium ions, gallium ions, antimony ions, and/or bismuth ions, more preferably is substantially free of or does not comprise metal ions of main groups III, IV, and/or V of the periodic table of elements.

In the context of the present invention "metal ions of main group III" does not include respective aluminum ions.

Preferably, the aqueous, noble metal-free activation composition is substantially free of or does not comprise polyvinylpyrrolidone, preferably is substantially free of or does not comprise a polyvinyl compound, more preferably is substantially free of or does not comprise an organic polymer comprising a vinyl moiety, most preferably is substantially free of or does not comprise a dissolved organic polymer.

Preferably, the aqueous, noble metal-free activation composition is substantially free of or does not comprise a protein, agar, gum Arabic, sugars, and polyalcohols.

Preferably, the aqueous, noble metal-free activation composition is substantially free of or does not comprise glycerol.

Preferably, the aqueous, noble metal-free activation composition is substantially free of or does not comprise gelatin.

Preferably, the aqueous, noble metal-free activation composition is substantially free of or does not comprise thiourea.

Preferably, the aqueous, noble metal-free activation composition is substantially free of or does not comprise a compound named Orzan-S.

Preferably, the aqueous, noble metal-free activation composition is substantially free of or does not comprise urea.

Preferably, the aqueous, noble metal-free activation composition is substantially free of or does not comprise polyethylenimine, preferably is substantially free of or does not comprise polyalkylenimine, most preferably is substantially free of or does not comprise an organic polymer comprising an imine moiety.

Preferably, the aqueous, noble metal-free activation composition is substantially free of or does not comprise sodium dodecyl sulfate, preferably is substantially free of or does not comprise an alkyl sulfate with 8 to 20 carbon atoms, most preferably is substantially free of or does not comprise a surfactant.

Preferably, the aqueous, noble metal-free activation composition is substantially free of or does not comprise a quinone.

Preferably, the aqueous, noble metal-free activation composition is substantially free of or does not comprise a fatty alcohol.

Preferably, the aqueous, noble metal-free activation composition is substantially free of or does not comprise an alkylene glycol, preferably is substantially free of or does not comprise a glycol.

As already outlined above, the activation composition does not additionally require anti-oxidizing compounds. Therefore, preferred is an aqueous activation composition, wherein the aqueous activation composition is substantially free of or does not comprise a compound preventing the oxidation of the conductive mixed oxides.

Preferably, the aqueous, noble metal-free activation composition comprises an additional agent, more preferably a carboxylic acid and/or salts thereof, even more preferably a di- or tricarboxylic acid and/or salts thereof, even more preferably a tricarboxylic acid and/or salts thereof, most preferably a hydroxy tricarboxylic acid and/or salts thereof, even most preferably citric acid, structural isomers, and/or salts thereof.

A preferred structural isomer is iso-citric acid and salts thereof. Most preferably, the at least one additional agent defined above (including the preferred variants) is the only additional agent in the activation composition.

Preferred the at least one additional agent is present in the activation composition in a total amount in a range from 0.01 mol/L to 0.5 mol/L, based on the total volume of the activation composition, more preferably in a range from 0.015 mol/L to 0.35 mol/L, more preferably in a range from 0.02 mol/L to 0.3 mol/L, most preferably in a range from 0.023 mol/L to 0.275 mol/L.

Preferably, the aqueous noble metal-free activation composition of the present invention is obtained at and/or has a temperature in a range from 10°C to 90°C, more preferably in a range from 14°C to 75°C, more preferably in a range from 16°C to 65°C, most preferably in a range from 18°C to 45°C, even most preferably in a range from 20°C to 32°C. In particular preferred is a temperature in a range from 18°C to 45°C, preferably in a range from 20°C to 32°C. This likewise preferably applies to the method for activating according to the second aspect of the present invention and the method for preparing said activation composition according to the third aspect of the present invention.

More preferably, the aqueous noble metal-free activation composition of the present invention is not obtained at and/or has not a temperature above 110°C, preferably above 100°C, more preferably above 95°C. This likewise preferably applies to the method for activating according to the second aspect of the present invention and the method for preparing said activation composition according to the third aspect of the present invention.

All preferred embodiments of the aqueous, noble metal-free activation composition according to the first aspect of the present invention are also preferred embodiments for the method for activating a surface of a non-conductive substrate for metallization according to the second aspect of the present invention.

All preferred embodiments of the aqueous, noble metal-free activation composition according to the first aspect of the present invention are also preferred embodiments for the method for preparing an aqueous, noble metal-free activation composition according to the third aspect of the present invention.

All preferred embodiments of the aqueous, noble metal-free activation composition according to the first aspect of the present invention are also preferred embodiments for the method for metallizing according to the fourth aspect of the present invention.

### The method for activating a surface of a non-conductive substrate:

The present invention according to the second aspect provides a method for activating a surface of a non-conductive substrate for metallization, the method comprising the steps:
(a) providing said substrate,
(b) providing an aqueous, noble metal-free activation composition comprising at least one activator, selected as a conductive mixed oxide at a total concentration ranging from 0.1 wt.-% to 25 wt.-% based on the total weight of the aqueous, noble metal-free activation composition.
(c) contacting the substrate with said activation composition such that at least one activator is deposited on the surface of said substrate and an activated surface for metallization is obtained.

In step (c) of the method for activating of the present invention, the substrate is contacted with the aqueous, noble metal-free activation composition to obtain an activated surface for metallization by depositing the at least one activator, i.e. depositing a seed or activation layer.

Preferred is a method for activating of the present invention, wherein in step (c) the contacting is carried out at a temperature in a range from 10°C to 90°C, preferably in a range from 14°C to 75°C, more preferably in a range from 16°C to 65°C, most preferably in a range from 18°C to 45°C, even most preferably in a range from 20°C to 32°C. In particular preferred is a temperature in step (c) in a range from 18°C to 45°C, preferably in a range from 20°C to 32°C.

Preferred is a method for activating of the present invention, wherein in step (c) the contacting is carried out for a time in a range from 1 minute to 10 minutes, preferably for 2 minutes to 8 minutes, more preferably for 3 minutes to 6 minutes, most preferably for 3.5 minutes to 5 minutes.

Preferred for the method, the method for activating of the present invention comprises a drying step for the substrate after step (c), and preferably comprises at least one rinsing step after the drying step, wherein more preferably the at least one rinsing step is performed with deionized water. In such a case a rinsed, activated surface for metallization is obtained.

### Pre-treatment

Preferred is a method for activating of the present invention, wherein the method comprises a pre-treatment step for the substrate prior to step (c):
(a-1) treating said substrate with a pre-treatment solution comprising a nitrogen-containing compound.

Preferred for the method, the pre-treatment solution has an alkaline pH, more preferably a pH in a range from 9.0 to 14.0, more preferably in a range from 10.0 to 13.5, even more preferably in a range from 10.5 to 13.0.

Preferred for the method, in the pre-treatment solution the nitrogen-containing compound is a polymer, preferably a water-soluble polymer.

More preferred for the method, in the pre-treatment solution the nitrogen-containing compound is a polymer comprising pyrrolidine moieties.

Preferably, the polymer is cationic.

Preferably, the nitrogen-containing compound consists of carbon atoms, nitrogen atoms, and hydrogen atoms.

Preferred for the method, in the pre-treatment solution the nitrogen-containing compound comprises quaternary nitrogen atoms.

Preferred for the method, the pre-treatment solution during step (a-1) has a temperature in a range from 20°C to 90°C, preferably in a range from 25°C to 80°C, more preferably in a range from 30°C to 70°C, most preferably in a range from 40°C to 60°C.

Preferred for the method, step (a-1) is carried out for 1 minute to 10 minutes, preferably for 2 minutes to 8 minutes, more preferably for 3 minutes to 6 minutes.

### The substrate:

The aqueous, noble metal-free activation composition according to the present invention allows for activating a surface of a non-conductive substrate for metallization. Such a substrate inherently cannot be successfully metallized and therefore needs an activation.

In the context of the present invention, activating means to modify the surface of the non-conductive substrate in such a way that it comprises the conductive mixed oxide after the respective activation step effectively bound to the substrate for subsequent metallization. Furthermore, the deposited conductive mixed oxide is sufficiently bound to the surface such that a subsequent metallization layer (i) can be deposited thereon and (ii) is altogether also sufficiently bound to the surface of the non-conductive substrate.

Preferred is an activation composition and/or method of the present invention for activating, wherein the non-conductive substrate comprises, preferably is, selected from the group consisting of plastics, resin-containing laminates, glasses, ceramics, semi-conductors, and mixtures thereof.

Preferred plastics comprise, preferably are, thermoplastics, more preferably comprise, preferably are, polyacrylates, polyamides, polyimides, polyesters, polycarbonates, polyalkylenes, polyphenylenes, polystyrenes, polyvinyls, or mixtures thereof.

Preferred polyacrylates comprise poly(methyl methacrylate) (PMMA).

Preferred polyimides comprise polyetherimide (PEI).

Preferred polyesters comprise polylactic acid (PLA).

Preferred polycarbonates comprise polycarbonate obtained with bisphenol A (PC).

Preferred polyalkylenes comprise polyethylene (PE), polypropylene (PP), polytetrafluoroethylene (PTFE), polyoxymethylene (POM), or mixtures thereof.

Preferred polyphenylenes comprise poly(phenylene oxide) (PPO), poly(phenylene ether) (PPE), or mixtures thereof.

Preferred polystyrenes comprise polystyrene (PS), acrylonitrile butadiene styrene (ABS), styrene/butadiene rubber (SBR), styrene-acrylonitrile (SAN).

Preferred polyvinyls comprise polyvinyl chloride (PVC), poly(ethylene-vinyl acetate) (PEVA), polyvinylidene difluoride (PVDF), or mixtures thereof.

Preferred resin-containing laminates comprise, preferably are, fiber-enforced resin-containing laminates, most preferably glass-fiber-enforced laminates.

Very preferably, the resin-containing laminates comprise as resin at least one polymer of epoxys, vinylesters, polyesters, amides, imides, phenols, alkylenes, sulfones, or mixtures thereof, most preferably epoxy, imides, or mixtures thereof.

A very preferred resin-containing laminate comprises, preferably is, FR4.

Preferred glasses comprise, preferably are, silica glass, soda-lime glass, float glass, fluoride glass, aluminosilicate glass, phosphate glass, borate glass, borosilicate glass, chalcogenide glass, aluminum oxide glass, or mixtures thereof.

Preferred ceramics comprise, preferably are, glass-ceramics, aluminum oxide ceramics, or mixtures thereof.

Preferred semi-conductors comprise, preferably are, silicon-based semi-conductors, more preferably silicon-based semi-conductors comprising silicon dioxide and/or silicon.

Very preferred semi-conductors are wafers.

All preferred embodiments of the method for activating according to the second aspect of the present invention are also preferred embodiments for the method for metallizing according to the fourth aspect of the present invention.

### The method for preparing:

According to a third aspect, the present invention is directed to a method for preparing an aqueous, noble metal-free activation composition for activating a surface of a non-conductive substrate for metallization, the method comprising the steps
(a) providing an aqueous solution,
(b) providing at least one activator, selected as a conductive mixed oxide at a total concentration ranging from 0.1 wt.-% to 25 wt.-% based on the total weight of the aqueous, noble metal-free activation composition.
(c) redispersing the at least on activator in the aqueous solution such that an aqueous, noble metal-free activation composition for activating a surface of a non-conductive substrate for metallization is obtained.

By redispersing, preferably by ultrasonicating, the at least one activator in the aqueous solution, a proper mixing of the at least one activator in the aqueous solution can be achieved.

Preferred is a method for preparing of the present invention, wherein during step (c) the at least one activator is redispersed in the aqueous, noble metal-free activation composition by ultrasonication.

By efficiently redispersing, preferably by ultrasonicating, the at least one activator in the aqueous, noble metal-free activation composition fast aggregation of the at least one activator in the activator composition is significantly reduced.

### The metallization:

The present invention according to the fourth aspect provides a method for metallizing an activated surface of a non-conductive substrate, the method comprising the steps
(A) providing the non-conductive substrate with the activated surface for metallization obtained by the method for activating according to the second aspect of the present invention, preferably as defined throughout the text as being preferred,
(B) metallizing the activated surface by contacting the activated surface with a first metallizing solution such that a first metallization layer is deposited on the activated surface.

In step (A) of the method for metallizing of the present invention the non-conductive substrate with the activated surface is provided as obtained by the method for activating according to the second aspect of the present invention; for details see text above. The aforementioned regarding the method for activating according to the second aspect of the present invention, preferably applies to the method for metallization according to the fourth of the present invention, most preferably as described as being preferred.

Preferred is a method for metallizing of the present invention, wherein in step (B) the first metallization layer is a distinct layer deposited on the conductive metal oxide obtained in step (c) of the method for activating of the present invention according to the second aspect.

Preferred is a method for metallizing of the present invention, wherein in step (B) the first metallization solution is essentially free of or does not comprise a reversible equilibrium between metal ions and particles thereof; more preferably is essentially free of or does not comprise metal/metal alloy particles, most preferably is essentially free of or does not comprise any particles.

Preferred is a method for metallizing of the present invention, wherein in step (B) the first metallization solution comprises a reducing agent.

Preferred is a method for metallizing of the present invention, wherein step (B) is carried out at a temperature in a range from 10°C to 95°C, preferably in a range from 15°C to 85°C, more preferably in a range from 20°C to 65°C, even more preferably in a range from 25°C to 55°C, most preferably in a range from 30°C to 45°C.

Preferred is a method for metallizing of the present invention, wherein step (B) is carried out for 30 seconds to 7 days, more preferably for 30 seconds to 24 hours, even more preferably for 30 seconds to 180 minutes, even more preferably for 45 seconds to 120 minutes, even more preferably for 1 minutes to 60 minutes, most preferably for 1.5 minutes to 45 minutes.

Preferred is a method for metallizing of the present invention, wherein in step (B) the first metallization solution comprises a reducing agent, preferably formaldehyde and/or glyoxylic acid, and is an autocatalytic type metallization solution, preferably comprising at least one species of transition metal ions, more preferably comprising copper ions and/or nickel ions.

Preferably the first metallization solution is a clear solution without particles.

Preferred is a method for metallizing of the present invention, comprising the steps
(A) providing the non-conductive substrate with the activated surface for metallization obtained by the method for activating according to the second aspect of the present invention, preferably as defined throughout the text as being preferred,
(B) metallizing the activated surface by contacting the activated surface with a first metallizing solution being an autocatalytic type metallization solution comprising copper ions and a reducing agent, preferably formaldehyde and/or glyoxylic acid, such that a first metallization layer comprising copper or a copper alloy is deposited on the activated surface.

Preferably, the method for metallizing of the present invention, comprises the additional step
(C) metallizing the first metallization layer by contacting the first metallization layer with a second metallizing solution such that a second metallization layer is deposited on the first metallization layer.

Preferred is a method for metallizing of the present invention, wherein in step (C) the second metallizing solution comprises a reducing agent, preferably formaldehyde and/or glyoxylic acid, and more preferably comprises a reducing agent and nickel ions.

Thus, preferred is a method for metallizing of the present invention, wherein in step (C) the second metallization layer comprises nickel; preferably is a nickel or a nickel alloy layer.

Preferred is a method for metallizing of the present invention, wherein in step (C) the second metallization layer starts deposition within 8 seconds to 7 days, more preferably for 30 seconds to 24 hours, even more preferably for 30 seconds to 180 minutes, even more preferably from 30 seconds to 10 minutes, even more preferably within 10 seconds to 25 seconds, most preferably within 12 seconds to 20 seconds. This most preferably applies if the second metallization layer comprises nickel; preferably is a nickel or a nickel alloy layer. Thus, own experiments have shown that a first metallization layer comprising noble metal functions as a booster for a second metallization layer of nickel or a nickel alloy.

The aforementioned preferred embodiments relating to the aqueous, noble metal-free activation composition according to the first aspect of the present invention preferably applies likewise to the method of the present invention for preparing the aqueous, noble metal-free activation composition according to the third aspect of the present invention and/or the method for activating a surface of the non-conductive substrate for metallization according to the second aspect of the present invention.

The aforementioned preferred embodiments relating to the method of the present invention for preparing the aqueous, noble metal-free activation composition according to the third aspect of the present invention and/or the method for activating a surface of the non-conductive substrate for metallization according to the second aspect of the present invention preferably applies likewise to the aqueous, noble metal-free activation composition of the present invention according to the first aspect of the present invention.

The synthesis procedures of several activators according to the present invention are summarized in the following:

### Magnetite (Fe₃O₄)

2.22 g of iron(II) sulfate heptahydrate and 4.34 g of iron(III) chloride hexahydrate are dissolved in 80 mL water under atmospheric conditions at room temperature and are stirred at 600 rpm. Subsequently 16.7 mL of ammonium hydroxide (25 wt.-%) is added for a period of 15 minutes. Then, the reaction mixture is stirred for additional 10 minutes.

The resulting product is separated by centrifugation for 10 min at 5000 rpm, washed five-times with deionized water and finally dried.

### Nickel ferrite (NiFe₂O₄)

2.38 g of nickel(II) chloride hexahydrate and 5.4 g of iron(III) chloride hexahydrate are dissolved in water and are stirred at 600 rpm. Subsequently 3M sodium hydroxide is added to the solution dropwise until a pH of 12 was reached. Then, the reaction mixture is heated at 80 °C for a period of 10 minutes and is maintained at 80 °C for additional 40 minutes. Afterwards, the reaction mixture is cooled to room temperature.

The resulting product is filtered, washed five-times with deionized water and finally dried.

### Manganese ferrite (MnFe₂O₄)

1.979 g of manganese(II) chloride tetrahydrate and 5.406 g of iron(III) chloride hexahydrate are dissolved in 80 mL of deionized water and are stirred at 1000 rpm. Subsequently a solution of 3 g sodium hydroxide in 15 mL of deionized water is added to the solution for a period of 10 minutes. Then, the reaction mixture is heated at 90 °C under reflux for a period of 10 minutes and is maintained at 90 °C for additional 60 minutes. Afterwards, the reaction mixture is cooled to room temperature.

The resulting product is filtered, washed five-times with deionized water and finally dried.

### Cobalt ferrite (CoFe₂O₄)

3.807 g of cobalt(II) chloride and 8.649 g of iron(III) chloride hexahydrate are dissolved in 80 mL of deionized water. Subsequently a solution of 5M sodium hydroxide in deionized water is added to the solution via a dropping funnel at once. Then, the reaction mixture is heated up to 90 °C under reflux for a period of 10 minutes and is maintained at 90 °C for additional 60 minutes. Afterwards, the reaction mixture is cooled to room temperature.

The resulting product is filtered, washed five-times with deionized water and finally dried.

### Copper ferrite (CuFe₂O₄)

1.024 g of copper(II) sulfate pentahydrate and 2.216 g of iron(III) chloride hexahydrate are dissolved in 80 mL of deionized water. Subsequently a solution of 5M sodium hydroxide in deionized water is added to the solution via a dropping funnel at once. Then, the reaction mixture is heated up to 80 °C under reflux for a period of 10 minutes and is maintained at 80 °C for additional 120 minutes. Afterwards, the reaction mixture is cooled to room temperature.

The resulting product is filtered, washed five-times with deionized water and finally dried.

### Vinylphosphonic-functionalized magnetite

8.09 g of iron(III) chloride hexahydrate and 4.11 g of iron(II) sulfate heptahydrate are dissolved in 600 mL of deionized water under argon atmosphere and are stirred at 8000 rpm. Subsequently 75 mL of ammonia (25 wt.-%) is added for a period of 12 minutes. The resulting product is washed five-times with deionized water.

The resulting product is redispersed by ultrasonication (33 W/cm²) for a period of 20 minutes. 2.27 g of vinyl phosphonic acid is added and sonicated for 20 minutes (33 W/cm²) at a temperature of 37 °C, while stirring at 8000 rpm, and while a pH of the reaction solution of 5.5 is maintained by the addition of vinyl phosphonic acid and sodium hydroxide. The resulting product is purified by dialysis for 72 h.

### PEG 1000-functionalized magnetite

2.73 g of iron(III) chloride hexahydrate and 1.39 g of iron(II) sulfate heptahydrate are dissolved in 100 mL of deionized water under nitrogen atmosphere and are stirred at 400 rpm. Subsequently sodium hydroxide (25 wt.-%) is added for a period of 10 minutes until a pH of 10.5 is reached and the reaction mixture is stirred for additional 30 minutes. 50 mL of a 50 wt.-% solution of PEG 1000 in deionized water is added and the reaction mixture is sonicated (5 W/cm², 3 pulses every 30 s) for a period of 1.5 minutes. The resulting product is purified by washing tree times with water and acetone.

### Citric-acid-functionalized magnetite

7.4 g of iron(III) chloride hexahydrate and 3.8 g of iron(II) sulfate heptahydrate are dissolved in 80 mL of deionized water under argon atmosphere and are stirred at 600 rpm. The temperature of the reaction mixture is raised to 70°C for a period of 10 minutes and the reaction mixture is maintained at 70°C for a period of 30 minutes until 20 mL of ammonia (25 wt.-%) is added. Subsequently an aqueous solution of citric acid (4 mL, 2.6 M) is added to the reaction mixture and the temperature of the reaction mixture is raised to 90 °C for a period of 10 minutes. The reaction mixture was maintained at 90 °C for a period of 60 minutes before the reaction mixture is cooled down to room temperature. The resulting product is purified by dialysis for 72 h.

The present invention is described in more detail by the following non-limiting examples.

### Examples

### Providing the activator:

After synthesis and purification of the activator, i.e. magnetite, the activator is typically freeze dried for 24 h for using the purified and dried activator in a method for activating a surface of a non-conductive substrate according to the present invention.

The activator is weighted according to the corresponding wt.-% of the aqueous activation composition as a ready-to-use homogenous composition.

### Providing the substrate:

Throughout all experiments substrates of either FR4 (Substrate 1, a resin-containing laminate, test panels with 3 x 1 cm), or ABS (Substrate 2, a plastic, test panels with 3 cm diameter) are used.

### Pre-treatment:

If not stated otherwise, each substrate is at least treated with a pre-treatment solution comprising a nitrogen-containing compound, in particular Securiganth P Sweller (V) for 5 minutes at a temperature of approximately 65°C, Securiganth P P-Etch (V) for 10 minutes at a temperature of approximately 60°C to 80 °C, and Securiganth P Reduction Cleaner (V) for 5 minutes at a temperature of approximately 30 °C. Afterwards the pre-treated substrates are rinsed with water.

### Activation composition stability:

The activation compositions according to the examples of the present invention comprise magnetite (Fe₃O₄) as activator. Preferably the magnetite activator can be stabilized in dispersion with an organic substituent and/or at least one stabilizer.

Specific and individual parameters of the respective activation compositions as well as results are summarized in the following tables. Each activation composition according to the present invention does not comprise (i.e. is totally free of) noble metal, in particular palladium. In fact, the activation compositions basically consist of the herewith mentioned ingredients and reaction products thereof.

All results shown in Tables 1, 2 and 3 for activator stability:

| | |
|---|---|
| +++ | Excellent |
| ++ | Good |
| + | Medium |
| - | Bad |

### First set of examples:

The base composition of the first set of examples comprises 95 wt.-% of water at a pH of 4.4. The corresponding stabilizer is added to the respective aqueous solution. 5 wt.-% of purified and dried magnetite (Fe₃O₄) is added and is redispersed in the aqueous solution using an ultrasonic probe (33 W/cm²) for 20 minutes.

**Table 1: specific and individual parameters of the first set of examples.**

| **Exp.** | **Stabilizer** | **Activator stability** |
|---|---|---|
| 1-1 | none | + |
| 1-2 | Formic acid | ++ |
| 1-3 | Acetic acid | ++ |
| 1-4 | Nitric acid | ++ |
| 1-5 | Sulfuric acid | +++ |

As can be derived from the results shown in Table 1, the stability of the activator, which is redispersed in the aqueous activation composition, increases by the addition of inorganic acids. The pure aqueous dispersion of magnetite in water without any stabilizer (see experiment 1-1) results in a medium stability of the activator resulting in at least partial aggregation of the activator.

By adding formic acid (see experiment 1-2), acetic acid (see experiment 1-3), and nitric acid (see experiment 1-4) the stability of the dispersion of the activator in the aqueous solution could be increased. The best results were obtained by addition of sulfuric acid (see experiment 1-5), wherein an excellent dispersion stability of the activator in the aqueous solution could be obtained.

### Second set of examples:

The base composition of the second set of examples comprises 95 wt.-% of water at a pH of 7.0. The corresponding stabilizer is added to the respective aqueous solution. 5 wt.-% of purified and dried magnetite (Fe₃O₄) is added and is redispersed in the aqueous solution using an ultrasonic probe (33 W/cm²) for 20 minutes.

**Table 2: specific and individual parameters of the second set of examples.**

| **Exp.** | **Stabilizer** | **Activator stability** |
|---|---|---|
| 2-1 | sodium sulfate (0.25 mol/l) | + |
| 2-2 | sodium sulfate (0.5 mol/l) | ++ |
| 2-3 | sodium sulfate (2.5 mol/l) | +++ |

As can be derived from the results shown in Table 2, the stability of magnetite as activator in the aqueous solution increases by the addition of increasing amounts of sodium sulfate as stabilizer.

By adding 0.25 mol/l sodium sulfate (see experiment 2-1) only a moderately dispersed activator could be obtained, while by adding 0.5 mol/l sodium sulfate (see experiment 2-2) or 2.5 mol/l sodium sulfate (see experiment 2-3), the aggregation stability of the activator in the aqueous solution could be increased.

### Third set of examples:

The base composition of the third set of examples comprises 95 wt.-% of water. The pH of the aqueous solution is adjusted respectively. 5 wt.-% of purified and dried magnetite (Fe₃O₄) is added and is redispersed in the aqueous solution using an ultrasonic probe (33 W/cm²) for 20 minutes.

**Table 3: specific and individual parameters of the third set of examples.**

| **Exp.** | **pH** | **Activator stability** |
|---|---|---|
| 3-1 | 1.9 | + |
| 3-2 | 4.4 | +++ |
| 3-3 | 4.7 | ++ |
| 3-4 | 11.1 | + |

As can be derived from the results shown in Table 3, the stability of magnetite as activator reaches an optimum at a pH of 4.4 (see experiment 3-2), wherein a dispersion of magnetite with an excellent stability could be achieved. Good results could be achieved at a pH of 4.7 (see experiment 3-3).

On the contrary at a pH of 1.9 (see experiment 3-1) and at a pH of 11.1 (see experiment 3-4) only medium stability of activator in the aqueous solution is obtained.

### Fourth set of examples:

The base composition of the fourth set of examples comprises 2.5 mL of a first metallization solution comprising copper ions (approx. 2 g/L Cu²⁺) and formaldehyde, as reducing agent with metallization parameters as follows: pH 11, 34°C for 30 minutes. 200 mg of various non-activated or activated magnetite samples have been added to 2.5 mL of the first metallization solution. During the metallization for a period of 80 minutes the relative absorption of the first metallizing solution at a wavelength of 671 nm is recorded to monitor metallization efficiency. Due to the reduction of copper(II) ions to elemental copper on the substrate during the metallization reaction, the intensity of the blue colour of the first metallizing solution, which is based on the amount of copper(II) ions, is reduced during the metallization reaction. Therefore, by monitoring the decrease of blue colour at a wavelength of 671 nm of the first metallizing reaction, the metallization efficiency in respect to employing various magnetite samples could be monitored.

All results shown in Table 4 for copper deposition and activator stability on the substrates are qualitatively ranked having the following synonyms:

| | |
|---|---|
| +++ | Excellent |
| ++ | Good |
| + | Medium |
| - | Bad |

**Table 4: specific and individual parameters of the fourth set of examples.**

| **Exp.** | **Magnetite activator** | **Activator stability** | **Copper deposition** |
|---|---|---|---|
| 4-1 | none | - | - |
| 4-2 | non-functionalized magnetite | + | +++ |
| 4-3 | citrate-functionalized magnetite | +++ | ++ |
| 4-4 | 3-Aminopropyltriethoxysilan-functionalized magnetite | +++ | +++ |
| 4-5 | PEG 1000-functionalized magnetite | ++ | ++ |
| 4-6 | Vinyl phosphonic acid-functionalized magnetite | +++ | +++ |

When comparing the various magnetite activators according to the present invention (examples 4-2 to 4-6) to the control bath, wherein no activator has been added (example 4-1), it is apparent that using the various non-functionalized or functionalized magnetite samples as activators results in a good or excellent copper deposition on the substrate, but also an above-average stability of the activator in the aqueous solution.

### Method for activating:

In respect to the fourth example, after providing the substrate, which has been preferably treated with a pre-treatment solution during a pre-treating step, the substrate is immersed in the aqueous activation composition, preferably for 2 minutes. Preferably, the immersion is conducted by raising and lowering the substrate in the aqueous activation composition, preferably at a rate of 60 per minute. Consequently, the activator is deposited on the surface of the substrate and an activated surface for metallization is obtained.

Contacting the substrates with the correspond compositions is carried out for a time sufficient to obtain activated surfaces for subsequent metallization.

Afterwards, the substrate is dried, preferably at a temperature of 60 °C for a period of 5 minutes to 10 minutes. Afterwards, the dried substrate is rinsed, preferably with deionized water, also preferably for a period of 2 minutes.

For each substrate a well adhering magnetite activation layer, which could not be washed away by rinsing, is deposited on the surface of the respective substrate.

### Metallizing compositions and metallization:

In respect to the fourth example, subsequently, the activated substrate is metallized by performing the method for metallizing the activated surface of the substrate of the present invention, wherein the first metallization solution is provided to obtain the first metallization layer, which is deposited on the activated surface. The first metallization solution is an electroless, autocatalytic copper bath comprising copper ions (approx. 2 g/L Cu²⁺) and an aldehyde, preferably formaldehyde, as reducing agent with metallization parameters as follows: pH 11, 34°C for 30 minutes.

Using the conductive mixed oxide as activator the aldehyde, preferably formaldehyde, is oxidized, so that the copper ions in the first metallizing solution are reduced, resulting in the formation of a copper layer on the activated surface of the substrate during an autocatalytic process.

After activation and metallization, a well adhering first metallization layer of copper is obtained covering entirely the activated surface.

## Claims

1. An aqueous, noble metal-free activation composition for activating a surface of a non-conductive substrate for metallization, the composition comprising:
at least one activator, selected as a conductive mixed oxide at a total concentration ranging from 0.1 wt.-% to 25 wt.-% based on the total weight of the aqueous, noble metal-free activation composition.

2. Aqueous, noble metal-free activation composition according to claim 1, wherein the at least one activator is selected as a spinel-type conductive mixed oxide of formula (I)
A(B)₂O₄ (I)
wherein A = Mn²⁺, Mg²⁺, Fe²⁺, Ni²⁺, Co²⁺, or Zn²⁺; and
wherein B = Fe³⁺, Cr³⁺, Co³⁺, Al³⁺, or V³⁺.

3. Aqueous, noble metal-free activation composition according to claim 1 or 2, wherein the at least one activator is selected as a normal or inversed spinel-type conductive mixed oxide of formula (la)
(A₁₋ₓBₓ)(AₓB₂₋ₓ)O₄ (la)
wherein A = Mn²⁺, Mg²⁺, Fe²⁺, Ni²⁺, Co²⁺, or Zn²⁺;
wherein B = Fe³⁺, Cr³⁺, Co³⁺, Al³⁺, or V³⁺; and
wherein x = 0 for a normal spinel-type conductive mixed oxide, or
wherein x = 1 for an inverse spinel-type conductive mixed oxide.

4. Aqueous, noble metal-free activation composition according to one of the preceding claims, wherein the at least one activator is selected as magnetite (Fe₃O₄), nickel ferrite (NiFe₂O₄), copper ferrite (CuFe₂O₄), manganese ferrite (MnFe₂O₄), cobalt ferrite (CoFe₂O₄), and/or cobaltite (Co₃O₄).

5. Aqueous, noble metal-free activation composition according to one of the preceding claims, wherein the aqueous, noble metal-free activation composition comprises the at least one activator at a total concentration ranging from 0.2 wt.-% to 20 wt.-%, preferably from 0.5 wt.-% to 15 wt.-%, more preferably from 1 wt.-% to 10 wt.-%, even more preferably from 2.5 wt.-% to 5 wt.-% and most preferably the concentration is 2.5 wt.-%.

6. Aqueous, noble metal-free activation composition according to one of the preceding claims, wherein the at least one activator is selected as a functionalized conductive mixed oxide comprising an organic component, wherein the organic component is preferably selected from polyethyleneglycoles (PEGs), more preferably PEG 1000, organic phosphonic acids, more preferably vinyl phosphonic acid, hydroxy carboxylic acids, polyethoxylated carboxylic acids, polycarboxylic acids, more preferably citric acid, and/or siloxanes, more preferably 3-Aminopropyltriethoxysilan (3-APTES) and/or Tetraethylorthosilicate (TEOS).

7. Aqueous, noble metal-free activation composition according to one of the preceding claims, wherein the mixed oxide of the at least one activator, selected as a conductive mixed oxide and/or a functionalized conductive mixed oxide comprising an organic component, is not bound to an additional inorganic substituent, wherein preferably the mixed oxide is not bound to an inorganic oxide, more preferably TiO₂ and/or SiO₂, and/or is not bound to a metal, more preferably not to Ag.

8. Aqueous, noble metal-free activation composition according to one of the preceding claims, wherein a pH-value of the aqueous, noble metal-free activation composition ranges from 2.5 to 13.0, preferably ranges from 2.5 to 8.0, more preferably ranges from 3.0 to 7.0, even more preferably ranges from 4.0 to 5.0, even more preferably ranges from 4.2 to 4.8.

9. Aqueous, noble metal-free activation composition according to one of the preceding claims, wherein the aqueous, noble metal-free activation composition comprises a first stabilizer selected as an acid, preferably as acetic acid, formic acid, nitric acid, and/or a sulphur-containing acid, even more preferably as methane sulfonic acid, allyl sulfonic acid, vinyl sulfonic acid and/or sulfuric acid, and most preferably as sulfuric acid.

10. Aqueous, noble metal-free activation composition according to one of the preceding claims, wherein the aqueous, noble metal-free activation composition comprises a second stabilizer selected as an inorganic salt, preferably as sulfate containing salt, more preferably as alkaline metal sulfate, even more preferably as lithium sulfate, sodium sulfate, potassium sulfate, rubidium sulfate, and/or caesium sulfate, and/or preferably as methane sulfonate, methane tri-sulfonate, methane di-sulfonate, allyl sulfonate and/or vinyl sulfonate, and most preferably at a concentration ranging from 0.05 mol/l to 10 mol/l, more preferably from 0.01 mol/l to 5 mol/l, and most preferably from 0.25 mol/l to 2.5 mol/l.

11. Aqueous, noble metal-free activation composition according to one of the preceding claims, wherein the aqueous, noble metal-free activation composition comprises at least one additional agent, preferably a carboxylic acid and/or salts thereof, more preferably a di- or tricarboxylic acid and/or salts thereof, even more preferably a tricarboxylic acid and/or salts thereof, most preferably a hydroxy tricarboxylic acid and/or salts thereof, even most preferably citric acid, structural isomers, and/or salts thereof.

12. A method for activating a surface of a non-conductive substrate for metallization, the method comprising the steps
(a) providing said substrate,
(b) providing an aqueous, noble metal-free activation composition comprising at least one activator, selected as a conductive mixed oxide at a total concentration ranging from 0.1 wt.-% to 25 wt.-% based on the total weight of the aqueous, noble metal-free activation composition.
(c) contacting the substrate with said activation composition such that at least one activator is deposited on the surface of said substrate and an activated surface for metallization is obtained.

13. A method for preparing an aqueous, noble metal-free activation composition for activating a surface of a non-conductive substrate for metallization, the method comprising the steps
(a) providing an aqueous solution,
(b) providing at least one activator, selected as a conductive mixed oxide at a total concentration ranging from 0.1 wt.-% to 25 wt.-% based on the total weight of the aqueous, noble metal-free activation composition.
(c) redispersing the at least on activator in the aqueous solution such that an aqueous, noble metal-free activation composition for activating a surface of a non-conductive substrate for metallization is obtained.

14. The method of claim 13, wherein during step (c) the at least one activator is redispersed in the aqueous, noble metal-free activation composition by ultrasonication.

15. A method for metallizing an activated surface of a non-conductive substrate, the method comprising the steps
(A) providing the non-conductive substrate with the activated surface for metallization obtained by a method for activating according to claim 12,
(B) metallizing the activated surface by contacting the activated surface with a first metallizing solution such that a first metallization layer is deposited on the activated surface.
